# DEMANDE DE BREVET EUROPEEN

(11) **EP 1 309 064 A2**
(43) Date de publication de la demande: **07.05.2003**
(21) Numéro de dépôt: 02292654.7
(22) Date de dépôt: 25.10.2002
(51) Int. Cl.: H02J 7/14, F02N 11/08

(54) **Procédé de gestion du fonctionnement d'une source de stockage d'énergie électrique, notamment d'un supercondensateur**

(30) Priorité: 26.10.2001 FR 0113890
(71) Demandeur: Renault s.a.s., 92100 Boulogne Billancourt (FR)
(72) Inventeur: Bogel, Wolfgang, 75014 Paris (FR); Hiron, Christian, 78690 Les Essarts Le Roi (FR)

(57) **Abrégé**

La source de stockage d'énergie électrique est capable de délivrer dans un bref laps de temps une puissance électrique importante à une charge électrique destinée à activer une unité fonctionnelle sous réserve qu'une commande prédéterminée soit appliquée à cette unité fonctionnelle.

Selon l'invention, le procédé consiste, avant d'activer ladite unité fonctionnelle, à en déterminer la température et, si ladite température est inférieure à une température prédéterminée, à effectuer au moins une fois les opérations consistant à brancher (D) ladite charge électrique sur ladite source de stockage d'énergie électrique sans appliquer ladite commande prédéterminée, puis à recharger (R) ladite source de stockage, ladite charge électrique étant ensuite rebranchée et ladite commande appliquée à ladite unité fonctionnelle pour la faire fonctionner (DEM).

## Description

La présente invention concerne un procédé de gestion d'une source de stockage d'énergie électrique capable de délivrer dans un bref laps de temps une puissance électrique importante à une charge électrique destinée à activer une unité fonctionnelle sous réserve qu'une commande prédéterminée soit appliquée à cette unité fonctionnelle.

Plus particulièrement, l'invention est relative à l'alimentation de réseaux électriques raccordés à au moins deux sources de stockage d'énergie électrique dont l'une doit pouvoir délivrer une puissance électrique élevée pendant de brefs laps de temps pour satisfaire la demande d'une charge importante branchée sur l' un des réseaux, et dont l'autre doit pouvoir assurer la fourniture d'une puissance électrique modérée pendant des périodes de temps prolongés en étant branché sur le second des réseaux.

Bien que l'invention n'y soit pas spécifiquement limitée, elle trouve une application particulièrement avantageuse dans la technique automobile, les réseaux électriques des véhicules automobiles devant assurer l'alimentation électrique de gros consommateurs de courant, tel que par exemple le démarreur destiné à lancer le moteur thermique dont ils sont équipés, d'autres charges électriques de faible puissance devant demeurer alimentées, lorsque le véhicule est à l'arrêt moteur coupé.

Par ailleurs, pour assurer une amélioration du comportement des véhicules automobiles et/ou le confort de leurs passagers, l'évolution de la technologie automobile s'accompagne d'une augmentation en nombre et en puissance des consommateurs électriques et électroniques de bord, qui doivent pouvoir être alimentés sélectivement tant lorsque le moteur thermique tourne que lorsqu'il est arrêté. De ce fait, les régimes de tension des réseaux classiques de bord ne comportant qu'une seule source de stockage d'énergie (la plupart du temps une batterie à 12/14 Volts) sont de moins en moins satisfaisants.

C'est pourquoi on voit apparaître de plus en plus des installations électriques de véhicules automobiles dont le réseau de bord est alimenté par un système bi-tension, les valeurs choisies des tensions étant en général 12/14 Volts en basse tension pour assurer l'alimentation en énergie et 36/42 Volts en haute tension pour assurer celle des charges de puissance dont en premier lieu le démarreur.

Les réseaux de bord bi-tension comportent en général une source de stockage d'énergie électrique fournissant la basse tension, en général la batterie classique, et une autre source capable dans un bref laps de temps de délivrer une grande puissance à la tension élevée du réseau. Les sources du deuxième type sont essentiellement les supercondensateurs déjà bien connus des spécialistes depuis un certain temps.

L'avantage d'un système d'alimentation à deux sources de stockage d'énergie électrique l'une pour la puissance et l'autre pour l'énergie consiste en ce que l'on peut adapter et dimensionner l'une et l'autre au plus juste et donc en réduire le coût.

En effet, lorsque le moteur thermique d'un véhicule tourne, c'est l'alternateur qui fournit l'énergie et la puissance moyennes nécessaires pour assurer toutes les demandes du réseau de bord. Par conséquent, les deux types de sources de stockage mentionnées ci-dessus ont uniquement pour fonction d'assurer le démarrage du moteur thermique, l'absorption des irrégularités des demandes de puissance du réseau et le maintien de certaines fonctions électriques lors d'arrêts ponctuels du moteur thermique (par exemple lors d'un fonctionnement avec ce qu'il est convenu d'appeler "stop and go") où encore pendant des abandons prolongés du véhicule lorsque quelques consommateurs modestes demandent peu de puissance.

Mis à part quelques situations de dévers, pendant lesquelles, le véhicule étant en marche, la batterie à faible tension doit suppléer une insuffisance momentanée d'alimentation de l'alternateur, cette batterie a surtout comme tâche d'alimenter les consommateurs fonctionnant moteur coupé. Son dimensionnement doit donc être tel qu'en fin de vie, elle soit encore capable d'assurer cette alimentation. Or, on sait par ailleurs que la durée de vie d'une batterie dépend notamment du nombre de cycles de charge/décharge et de la profondeur de décharge. Ces paramètres étant déterminables, il est possible de choisir la capacité et la taille de la batterie avec une bonne précision pour qu'en fin de vie elle puisse assurer les fonctions d'alimentation qui lui sont demandées.

En tout état de cause, dans un système d'alimentation à deux sources de stockage d'énergie, une défaillance de la batterie n'entraîne pas une panne immobilisante du véhicule, puisque la fonction de démarrage est assurée par l'autre source de stockage d'énergie par exemple par les supercondensateurs. Par conséquent, pour éviter des pannes immobilisantes d'un véhicule équipé de la sorte, il convient de gérer convenablement le fonctionnement de cette deuxième source de stockage d'énergie et notamment de veiller à ce qu'en fin de vie, elle puisse encore remplir son rôle.

L'homme de métier connaît les supercondensateurs et également des sources de stockage analogues telles que les batteries de puissance à Li-ion, à Ni-MH ou au plomb spiralé. Il sait également que ce type de sources, capables de délivrer beaucoup de puissance électrique en un bref laps de temps, ne posent pas les mêmes problèmes de vieillissement que les batteries de fourniture d'énergie dont la durée de vie est déterminée notamment par les cycles de charge/décharge auxquels est soumise leur matière active.

Par ailleurs, les sources de stockage de puissance, comme les supercondensateurs, ont une puissance spécifique qui ne dépend que peu de la température, du moins dans la gamme de températures entre -25°C et +65°C habituellement considérée en technologie automobile.

Il convient cependant de noter que ces sources de stockage présentent un certain vieillissement qui se traduit par une augmentation de la résistance interne (environ +50% en 10 ans) et une diminution de la capacité (-10% en 10 ans).

Pour éviter des pannes immobilisantes d'un véhicule dont le démarrage est assuré par ce type de source de stockage, il convient donc classiquement de la dimensionner de telle manière que sur une durée de vie projetée de 10 ans, par exemple, elle puisse faire son office pour le démarrage, même à la plus basse température (-20°C) de la gamme de températures mentionnée ci-dessus, ce qui équivaut à en surdimensionner la puissance de 50% et la capacité de +10%.

Il en résulte un coût relativement important alors que la plupart des démarrages d'un véhicule de série ne se font pas à cette basse température. D'autre part, si le dimensionnement est trop modéré, il se peut que dans certains cas, où le vieillissement est plus rapide dû par exemple à un usage intensif (beaucoup de cycles de démarrage), une panne immobilisante pourra quand même intervenir.

Par US 5 155 374, on connaît un système d'alimentation pour véhicule automobile comprenant deux sources de stockage d'énergie électrique analogues à celles qui viennent d'être évoquées (batterie et supercondesateurs). Dans ce cas, hors démarrage, les deux sources sont connectées en parallèle et leurs tensions sont donc équivalentes. Au moment du démarrage, un jeu de relais de puissance met en série les deux sources pour alimenter un démarreur au double de la tension (24 Volts) . Ce doublement permet, pendant les premiers instants de démarrage, de réduire l'intensité du courant d'une quantité qui sera cependant inférieure à deux fois (en fait inférieure à 1,5 fois seulement) compte tenu de la chute ohmique dans les supercondensateurs. Or, cette chute ohmique va augmenter avec le vieillissement de sorte qu'un surdimensionnement n'est pas évitable dans cette solution antérieure. Ce montage a d'autres inconvénients ayant trait notamment à une trop grande charge imposée à la batterie lors du démarrage.

L'invention a pour but de faciliter le dimensionnement des sources de stockage de ce type et d'éviter la nécessité de leur surdimensionnement.

L'invention a donc pour objet un procédé de gestion du type défini en préambule qui est caractérisé en ce qu'il consiste, avant d'activer ladite unité fonctionnelle, à en déterminer la température et, si ladite température est inférieure à une température prédéterminée, à effectuer au moins une fois les opérations consistant à brancher ladite charge électrique sur ladite source de stockage d'énergie électrique sans appliquer ladite commande prédéterminée, puis à recharger ladite source de stockage, ladite charge électrique étant ensuite rebranchée et ladite commande appliquée à ladite unité fonctionnelle pour la faire fonctionner.

Grâce à ces caractéristiques, il est possible de réduire, par l'échauffement, éventuellement répété, de la source de stockage d'énergie électrique, échauffement dû au courant tiré par la charge, la résistance interne de ladite source de telle sorte que l'activation de l'unité fonctionnelle peut ensuite se faire dans de meilleures conditions. Il est ainsi possible d'éviter un surdimensionnement de la source de stockage puisque la réduction de la résistance interne par échauffement permet, surtout en fin de vie de la source de stockage, de compenser les effets de son vieillissement.

Selon d'autres particularités avantageuses de l'invention:
- ladite source de stockage d'énergie électrique est un jeu de supercondensateurs, une batterie au lithium-ion, une batterie au Ni-MIH ou une batterie au plomb spiralé;
- le procédé consiste à réaliser l'opération de recharge à partir d'une seconde source de stockage d'énergie électrique;
- ladite seconde source de stockage est une batterie au plomb;
- ladite première source de stockage d'énergie fournit une tension de valeur élevée à un premier réseau d'alimentation sur lequel est branchée ladite charge électrique, ladite seconde source de stockage d'énergie électrique fournit une tension de valeur faible à un second réseau d'alimentation et lesdites première et seconde sources de stockage électrique sont connectées l'une à l'autre à travers un convertisseur réversible;
- ledit premier réseau d'alimentation est alimenté par un générateur d'énergie électrique entraîné par ladite unité fonctionnelle et connectée en parallèle à ladite première source de stockage électrique;
- si la température de ladite unité fonctionnelle est supérieure à ladite température prédéterminée, le procédé consiste à activer ladite unité opérationnelle par l'intermédiaire de ladite charge électrique en lui appliquant ladite commande, le cas échéant après une recharge de ladite première source de stockage électrique;
- ladite unité fonctionnelle est un moteur thermique d'un véhicule automobile, ladite charge électrique est le démarreur de ce moteur thermique et ladite commande est l'injection de carburant ou l'allumage dudit moteur thermique.

D'autres caractéristiques et avantages de la présente invention apparaîtront au cours de la description qui va suivre, donnée uniquement à titre d'exemple et faite en se référant aux dessins annexés sur lesquels:
- la figure 1 est un schéma d'un système classique d'alimentation électrique bi-tension d'un véhicule automobile, auquel le procédé de gestion selon l'invention peut être appliqué;
- la figure 2 est un diagramme illustrant en fonction du temps, le profil de tension d'un supercondensateur soumis à une forte demande de puissance;
- la figure 3 est un diagramme des temps illustrant le déroulement du procédé de gestion selon l'invention.
- la figure 4 est un organigramme très simplifié illustrant le déroulement du procédé de l'invention.

Bien que le procédé de gestion selon l'invention soit décrit ci-après dans le cadre d'un double réseau d'alimentation électrique bi-tension à bord d'un véhicule automobile, il convient de souligner qu'il s'applique dans tous les cas où il s'agit de gérer le fonctionnement d'un jeu de supercondensateurs, ou d'une source de stockage d'énergie électrique analogue, fonctionnant en coopération avec une autre source d'énergie permettant, au besoin, de recharger le jeu de supercondensateurs, ces sources devant notamment assurer l'alimentation électrique d'une unité fonctionnelle qui ne devient opérationnelle que si un signal de commande prédéterminé lui est appliquée. Ainsi, le procédé selon l'invention peut s'appliquer dans le cadre de l'alimentation électrique de dispositifs aussi variés que des ordinateurs portables, des satellites et autres.

De même, l'invention peut également être appliquée à un système d'alimentation fonctionnant sous une seule tension électrique.

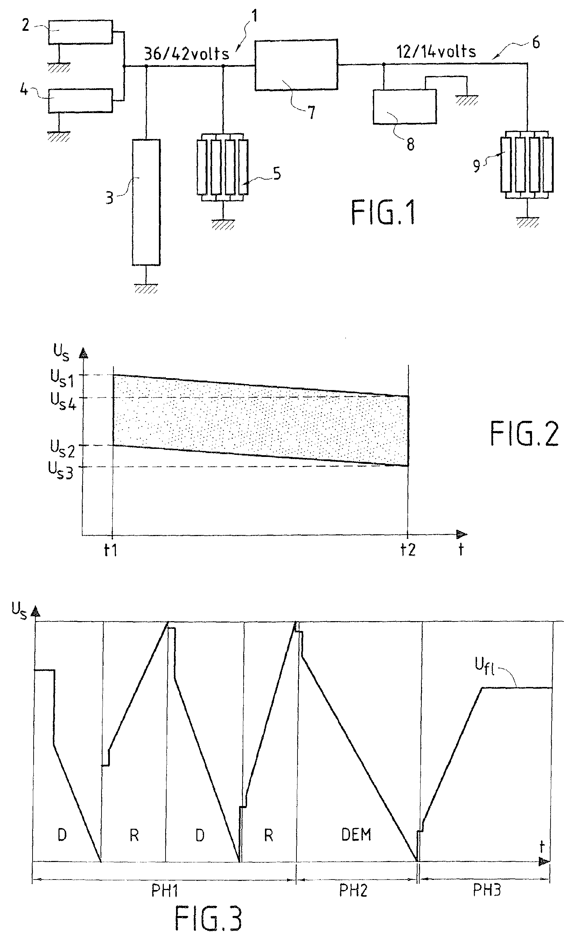

Ceci étant précisé, sur la figure 1, on a représenté un système classique d'alimentation bi-tension pour un véhicule automobile, système auquel le procédé selon l'invention peut avantageusement être appliqué. Il comprend un premier réseau 1 à haute tension, par exemple à 36/42 Volts qui, moteur thermique (non représenté) du véhicule tournant, est alimenté par un alternateur 2, monté en parallèle sur un jeu d'éléments supercondensateurs 3 (appelé ci-après par commodité "supercondesateur"). Un démarreur 4 pour le moteur thermique est branché sur ce réseau à haute tension, ainsi que d'autres consommateurs 5 de puissance importante, comme la climatisation par exemple.

Le premier réseau 1 à haute tension est raccordé à un second réseau 6 à basse tension, par exemple de 12/14 Volts par l'intermédiaire d'un convertisseur réversible 7 capable de transformer la basse tension en haute tension et vice versa, et également de transmettre dans les deux sens de l'énergie électrique d'un réseau à l'autre.

Sur le deuxième réseau 6 sont branchés une batterie 8, par exemple au plomb, et des consommateurs à basse tension 9, comme la radio, des éclairages et autres.

Pour les sources de stockage d'énergie qui sont le supercondensateur 3 et la batterie 8, on peut utiliser d'autres composants connus en soi remplissant des fonctions équivalentes.

Dans le système d'alimentation de la figure 1, les premier et second réseaux 1 et 6 sont alimentés par l'alternateur 2, lorsque le moteur thermique tourne. Les sources de stockage d'énergie électrique 3 et 8 sont alors maintenues chargées, étant entendu que la batterie 8 reçoit son courant de charge par l'intermédiaire du convertisseur 7. Lorsque le véhicule est à l'arrêt et que le moteur thermique est coupé, c'est essentiellement la batterie 8 qui alimente en énergie ceux parmi les consommateurs 9 qui restent alors branchés sur le réseau. Ce mode d'alimentation peut évidemment perdurer par exemple si le véhicule est abandonné pendant des périodes prolongées.

Pour démarrer le moteur, le démarreur 4 est alimenté essentiellement en puissance par le supercondensateur 3 dont la charge est maintenue, au besoin en tirant de l'énergie de la batterie 8 après conversion dans le convertisseur 7.

Dans le cadre de l'invention, il a été observé que, bien que peu sensibles à la température environnante, les supercondensateurs ont une résistance interne qui dépend de la température et dont la valeur peut doubler entre -20°C et +20°C. Par conséquent, pour satisfaire les exigences de fiabilité à basse température, il convient de dimensionner le supercondensateur de telle manière qu'il puisse encore assurer le démarrage à la température la plus basse (-20°C) de la gamme de températures imposée par les normes de fiabilité en technique automobile. Cela revient classiquement à un surdimensionnement considérable du supercondensateur pour des températures plus élevées, les plus souvent rencontrées pendant l'utilisation du véhicule (du moins dans les pays à climat tempéré). Cependant, en vieillissant, la résistance interne du supercondensateur va augmenter et la puissance qu'il pourra fournir diminuera d'autant.

La figure 2 illustre le comportement d'un supercondensateur lorsqu'il est soumis à une forte demande de puissance. Lorsque, au temps t₁, un consommateur de forte puissance est branchée sur un supercondensateur chargé jusqu'à la tension Uₛ₁, la tension aux bornes de ce dernier chute immédiatement jusqu'à une tension Uₛ₂ du fait de la chute de tension dans la résistance interne du supercondensateur. Pendant que le consommateur est branché (intervalle t₂ - t₁), la tension baissera encore du fait de la perte de charge jusqu'à une tension Uₛ₃, la tension remontant à une valeur Uₛ₄, proche de la tension initiale, lorsque le consommateur est débranché. La partie hachurée du diagramme de la figure 2 correspond à l'énergie dissipée dans la résistance interne du supercondensateur. Le vieillissement du supercondensateur augmente progressivement cette quantité d'énergie dissipée.

Par ailleurs, le démarrage du moteur thermique implique le respect d'au moins trois conditions. Tout d'abord, la tension du réseau 1 (figure 1) ne doit pas descendre en-dessous d'une valeur minimale pour que l'alimentation d'autres consommateurs essentiels pendant le démarrage puisse être maintenue. Il convient également que le supercondensateur puisse fournir suffisamment de puissance pour faire tourner le démarreur et lancer le moteur thermique jusqu'à une vitesse de rotation suffisante pour déclencher le processus de combustion. Enfin, cette puissance doit être fournie pendant un temps suffisant pour que ce processus puisse se déclencher.

Si donc en fin de vie du supercondensateur, il faut démarrer à une température très basse, le phénomène illustré sur la figure 2 risque d'empêcher le démarrage.

Cependant, il a également été observé que l'absorption d'énergie par la résistance interne du supercondensateur va de pair avec un dégagement de chaleur au sein du supercondensateur, ce dont il résulte un échauffement d'autant plus important qu'en général, la masse du supercondensateur est faible. Cet échauffement a pour conséquence une réduction de la résistance interne du supercondensateur. De ce fait, pendant qu'un consommateur important y est branché, l'énergie dissipée par la résistance interne sera moindre ce dont il résulte que le supercondensateur peut délivrer la puissance demandée plus longuement dans une même fenêtre de tensions Uₛ₁ - Uₛ₃.

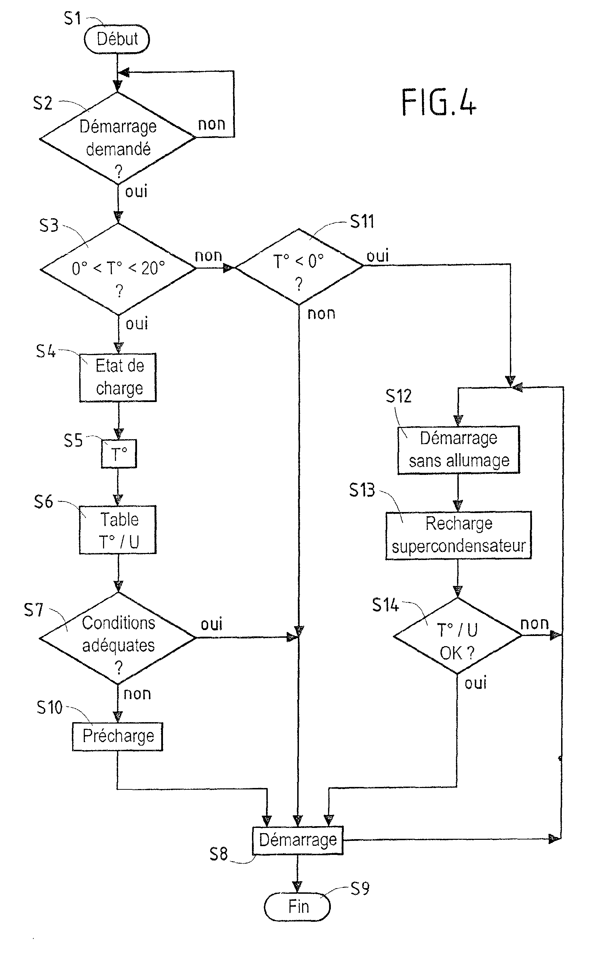

Le procédé de gestion selon l'invention qui sera maintenant décrit en faisant référence au diagramme de la figure 3 et à l'organigramme de la figure 4, exploite ce phénomène de réduction de la résistance interne de manière à éviter une panne immobilisante si un démarrage doit être effectué dans des conditions défavorables de température et de vieillissement du supercondensateur.

Le programme de gestion peut être exécuté en tant que sous-programme du programme général présidant au fonctionnement de l'ensemble du moteur thermique et/ou du véhicule (allumage, injection, boîte de vitesses etc.) et à ce titre il pourra être exécuté par le calculateur central (non représenté) du véhicule. Bien entendu, il peut également être prévu un calculateur spécialement dédicacé à la tâche de gestion du système électrique.

Le programme selon l'invention commence au pas de programme S1 de la figure 4. Au pas de programme S2, il est d'abord vérifié si un démarrage est demandé. Ce test est effectué tant qu'un début de démarrage n'est pas constaté.

Dès que la réponse au test S2 est affirmative, il est vérifié au pas de programme S3, si la température du moteur thermique se situe dans une gamme prédéterminée de températures réputées permettre un démarrage dans des conditions faciles, cette gamme pouvant aller de 0°C à 20°C, par exemple.

Si le test du pas de programme S3 s'avère affirmatif, l'état de charge du supercondensateur 3 est relevé (la tension à ses bornes) et la température du moteur thermique est mesurée (pas de programme S4 et S5). Le couple de paramètres ainsi mesuré est introduit dans une table caractéristique (non représentée) où les conditions de démarrage correspondantes sont recherchées (pas de programme S6).

Au pas de programme S7, un test est effectué pour vérifier si les conditions de démarrage relevées dans la table caractéristique correspondent à des conditions adéquates de démarrage. Si tel est le cas, le programme autorise et commande le démarrage du moteur thermique (pas de programme S8) et le programme prend fin en S9.

En revanche, si le test du pas de programme S7 s'avère négatif, cela signifie que le supercondensateur 3 n'était pas suffisamment chargé au moment où le démarrage a été demandé. Le procédé de gestion passe alors à une opération de précharge du supercondensateur à partir de la batterie 8 par l'intermédiaire du convertisseur 7 (pas de programme S10).

La précharge étant achevée, toutes les conditions sont réunies pour assurer un démarrage réussi et celui-ci est donc autorisé et commandé par le pas de programme 38, le programme prenant également fin en S9.

Si le test du pas de programme S3 reçoit une réponse négative, il est vérifié (test du pas de programme 511), si la température du moteur thermique est inférieure à 0°C. Si ce test reçoit une réponse négative, c'est que la température du moteur est supérieure à 20°C, ce dont il résulte que le démarrage se fera de toute manière dans de bonnes conditions. Par conséquent, celui-ci est commandé et exécuté par le pas de programme S8 et le programme prend fin en S9.

Si le test du pas de programme S11 est affirmatif, le programme entre dans une boucle de traitement qui met en oeuvre une caractéristique essentielle de l'invention. Les opérations de cette boucle de traitement sont illustrées graphiquement à la figure 3.

Le premier pas de programme S12 de cette boucle de programme consiste à autoriser le lancement du moteur thermique, mais sans qu'une commande importante pour le fonctionnement du moteur soit donnée. Il peut s'agir de la neutralisation temporaire par exemple de la commande d'injection ou de l'allumage. Il en résulte que le moteur thermique commence à tourner mais sans vraiment démarrer. Dans ces conditions, le moteur thermique imposant un couple d'entraînement important au démarreur, celui-ci va constituer un consommateur de forte puissance pour le supercondensateur 3 qui sera donc déchargé avec un fort courant consommé et une réduction importante de sa résistance interne. L'opération de décharge du pas de programme S12 étant poursuivie jusqu'à ce que la tension minimale admissible sur le supercondensateur 3 soit atteinte, elle est immédiatement suivie d'une opération de recharge (pas de programme S13) à partir de la batterie 8 par l'intermédiaire du convertisseur 7, la charge ramenant la tension aux bornes du supercondensateur 3 de nouveau à la tension maximale.

La recharge étant achevée, il est vérifié au cours du pas de programme S14 si les conditions de température et de tension sont satisfaisantes pour ce qui concerne le supercondensateur 3, afin de procéder au démarrage du moteur thermique. Si ce n'est pas le cas, le programme retourne à l'opération du pas de programme S12 pour provoquer un nouveau lancement du moteur thermique d'où il résultera une décharge à fort courant, un nouveau réchauffement du supercondensateur 3 et donc une réduction de la résistance interne de ce dernier. Après une nouvelle recharge selon le pas de programme S13, le test en S14 est renouvelé et si cette fois il s'avère affirmatif, un démarrage est tenté. En d'autres termes, le démarreur 4 est branché alors que la commande (injection ou allumage) du moteur thermique est assurée.

Le diagramme de la figure 3 montre un exemple d'exécution du procédé de l'invention par l'évolution de la tension Uₛ sur le supercondensateur 3 entre la valeur maximale et la valeur minimale admissible. Dans ce diagramme, il est supposé que l'on procède à deux reprises à la décharge D puis la recharge R du supercondensateur 3 (phase PH1) après quoi le démarrage DEM a lieu au cours de la phase PH2 suivie d'une phase PH3 de fonctionnement normal du moteur thermique démarré, la tension aux bornes du supercondensateur 3 atteignant alors sa valeur normale de fonctionnement U_{fl} (appelé aussi "tension de floating" par les spécialistes).

## Revendications

1. Procédé de gestion d'une source de stockage d'énergie électrique (3) capable de délivrer dans un bref laps de temps une puissance électrique importante à une charge électrique (4) destinée à activer une unité fonctionnelle sous réserve qu'une commande prédéterminée soit appliquée à cette unité fonctionnelle, **caractérisé en ce qu'**il consiste, avant d'activer ladite unité fonctionnelle, à en déterminer la température et, si ladite température est inférieure à une température prédéterminée, à effectuer au moins une fois les opérations consistant à brancher (D) ladite charge électrique sur ladite source de stockage d'énergie électrique sans appliquer ladite commande prédéterminée, puis à recharger (R) ladite source de stockage (3), ladite charge électrique (4) étant ensuite rebranchée et ladite commande appliquée à ladite unité fonctionnelle pour la faire fonctionner (DEM).

2. Procédé selon la revendication 1, **caractérisé en ce que** ladite source de stockage d'énergie électrique (3) est un jeu de supercondensateurs, une batterie au lithium-ion, une batterie au Ni-MIH ou une batterie au plomb spiralé.

3. Procédé selon l'une quelconque des revendications 1 et 2, **caractérisé en ce qu'**il consiste à réaliser l'opération de recharge à partir d'une seconde source de stockage d'énergie électrique (8).

4. Procédé selon la revendication 3, **caractérisé en ce que** ladite seconde source de stockage (8) est une batterie au plomb.

5. Procédé selon l'une quelconque des revendications 3 et 4, **caractérisé en ce que** ladite première source de stockage d'énergie (3) fournit une tension de valeur élevée à un premier réseau d'alimentation (1) sur lequel est branchée ladite charge électrique (4), **en ce que** ladite seconde source de stockage d'énergie électrique (8) fournit une tension de valeur faible à un second réseau d'alimentation (6) et **en ce que** lesdites première et seconde sources de stockage électrique (3, 8) sont connectées l'une à l'autre à travers un convertisseur réversible (7).

6. Procédé selon la revendication 5, **caractérisé en ce que** ledit premier réseau d'alimentation (1) est alimenté par un générateur d'énergie électrique (2) entraîné par ladite unité fonctionnelle et connectée en parallèle à ladite première source de stockage électrique (3).

7. Procédé selon l'une quelconque des revendications 1 à 6, **caractérisé en ce que**, si la température de ladite unité fonctionnelle est supérieure à ladite température prédéterminée, il consiste à activer ladite unité opérationnelle par l'intermédiaire de ladite charge électrique (4) en lui appliquant ladite commande, le cas échéant après une recharge de ladite première source de stockage électrique (3).

8. Procédé selon l'une quelconque des revendications 1 à 7, **caractérisé en ce que** ladite unité fonctionnelle est un moteur thermique d'un véhicule automobile, ladite charge électrique est le démarreur (4) de ce moteur thermique et ladite commande est l'injection de carburant ou l'allumage dudit moteur thermique.
